Europäisches Patentamt

European Patent Office

Office européen des brevets

(19)

(11) Numéro de publication : **0 023 336 B1**

(12) **FASCICULE DE BREVET EUROPÉEN**

(45) Date de publication du fascicule du brevet :
**05.01.83**

(51) Int. Cl.³ : **H 02 B 15/04**, H 02 B 15/00,
B 61 L 25/08

(21) Numéro de dépôt : **80104284.7**

(22) Date de dépôt : **21.07.80**

(54) Tableau de contrôle optique et/ou de commande des postes d'aiguillage de voies ferrées.

(30) Priorité : 26.07.79 FR 7919335

(43) Date de publication de la demande :
04.02.81 Bulletin 81/05

(45) Mention de la délivrance du brevet :
05.01.83 Bulletin 83/01

(84) Etats contractants désignés :
BE CH DE FR GB IT LI SE

(56) Documents cités :
DE C 874 787
FR A 1 249 511
FR A 1 490 694
US A 3 877 189

(73) Titulaire : **ALSTHOM-ATLANTIQUE Société anonyme dite:**
**38, Avenue Kléber**
**F-75784 Paris Cedex 16 (FR)**

(72) Inventeur : **Lallement, Roger**
**2, rue des Martyrs**
**F-60110 Meru (FR)**

(74) Mandataire : **Weinmiller, Jürgen et al**
**Zeppelinstrasse 63**
**D-8000 München 80 (DE)**

Tableau de contrôle optique et/ou de commande des postes d'aiguillage de voies ferrées

La présente invention concerne un tableau de contrôle optique et/ou de commande des postes d'aiguillage de voies ferrées servant notamment à représenter d'une façon figurée le plan des voies ferrées.

Il est connu de réaliser des panneaux de visualisation représentant schématiquement le tracé des câbles électriques dans les postes de transformation, les usines ou les centrales électriques à l'aide d'une mosaïque d'éléments fixés sur une grille dont les éléments ont la forme d'un carré ou d'un rectangle. Ceci se conçoit parce que les inscriptions schématiques des circuits sont parallèles et comportent des intersections à angle droit. De ce fait le nombre des éléments de la mosaïque est réduit au minimum et ceux-ci peuvent être juxtaposés d'une façon simple bout à bout ou à angle droit. Un tel exemple est illustré par les figures 1 à 4 du document FR-A 1 490 694 dans lequel un bâti en forme de cellules rectangulaires reçoit des plaques en forme de carreaux. Ces carreaux sont munis de bras terminés par des appendices pénétrant d'une façon élastique dans des branches des cloisons du bâti.

Cependant pour représenter des aiguillages de voie ferrée dont les jonctions forment un angle obtus entre les voies, l'utilisation d'éléments carrés juxtaposés n'est pas pratique et nécessite de se servir de panneaux d'une pièce en tôle portant les schémas figuratifs et percés de trous à la demande pour y disposer les voyants lumineux. Ces diverses solutions dans l'application aux visualisations des voies ferrées manquent par conséquent de souplesse dans l'utilisation.

Par ailleurs, la juxtaposition des différents carreaux est délicate demandant une concordance exacte entre appendices et branches des cloisons.

Le tableau selon la présente invention remédie à ces inconvénients. Dans celui-ci, en effet, la juxtaposition d'éléments discrets peut être réalisée d'une façon aisée et pratique permettant de nombreuses applications aux différents cas de figures.

Le tableau de contrôle optique et/ou de commande des postes d'aiguillage des voies ferrées comportant un support en forme de grille constitué d'au moins deux séries de plaquettes comportant des fentes équidistantes sur lesdites séries et emboîtées les unes dans les autres et dans lesdites fentes de façon à réaliser des alvéoles sur lesquels sont superposés des éléments discrets portant des inscriptions partielles du plan du réseau des voies ferrées, lesdits éléments comportant sur la face opposée aux inscriptions des cliquets de fixation sur ladite grille est caractérisé par le fait que lesdits éléments sont en forme de triangles équilatéraux, comportant en outre des pattes de guidage sur ladite face opposée, lesdites plaquettes étant munies d'ouvertures, ledit cliquet étant juxtaposé à travers cette ouverture à ladite patte de guidage de telle sorte qu'une patte de guidage d'un élément est en contact avec un cliquet d'un élément juxtaposé.

Par ailleurs, il est connu, par exemple à partir du document US-A 3 877 189, qu'on peut également se servir d'éléments triangulaires pour réaliser des tableaux de normalisation de circuits électriques, bien que les éléments carrés et hexagonaux soient considérés dans ce document comme des exemples préférés de réalisation.

L'invention sera mieux comprise à l'étude de l'exemple de réalisation donné ci-après et du dessin annexé dans lequel

les figures 1A à 1L représentent chacune un élément en triangle équilatéral d'un tableau selon l'invention ;

les figures 2 à 8 montrent diverses combinaisons d'éléments selon la figure 1 disposées deux à deux ;

la figure 9 représente un exemple de réseau des voies ferrées utilisant les éléments selon la figure 1 ;

la figure 10 est un autre exemple de réseau utilisant les éléments selon la figure 1 ;

la figure 11 est une vue en perspective partielle d'un tableau selon l'invention ;

la figure 12 est une vue en perspective d'une grille faisant partie du tableau selon la figure 11 ;

la figure 13 est une vue en perspective de la face arrière d'un élément selon la figure 1 ;

la figure 14 est une vue partiellement coupée juxtaposant deux éléments selon la figure 2 avec un constituant de grille selon la figure 12 ;

la figure 15 est une vue en perspective éclatée représentant schématiquement les connexions électriques d'un voyant associé à un élément selon la figure 1.

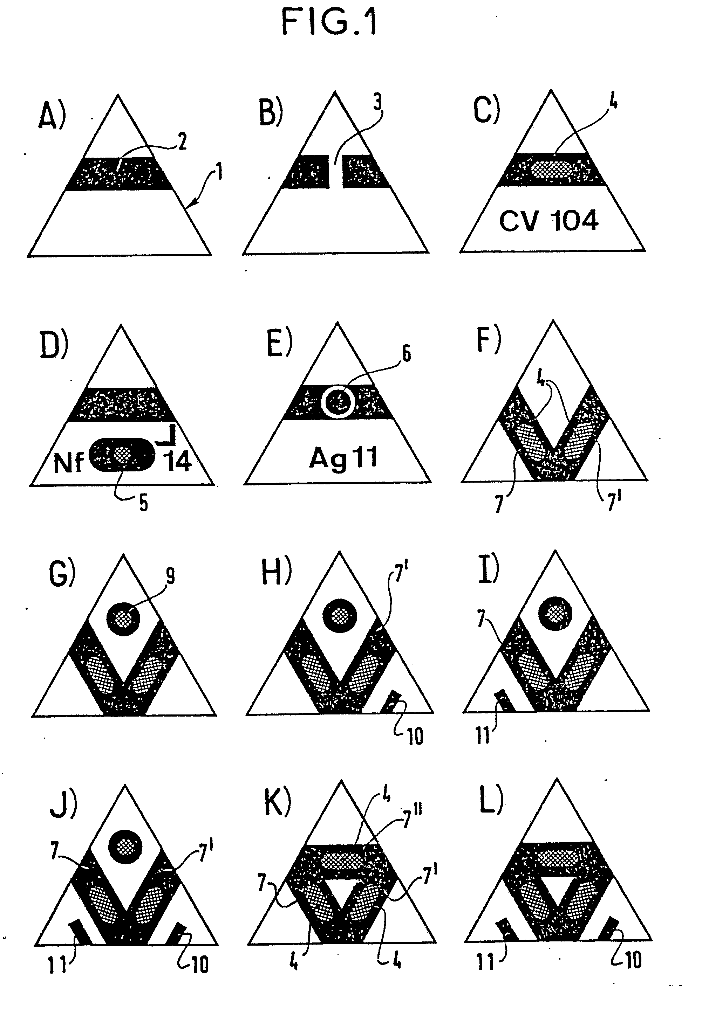

Les figures 1A à 1L illustrent chacune la face frontale d'un élément 1 comme il est dit ci-dessus, c'est un exemple de réalisation de l'invention faisant partie d'une mosaïque réalisant le tableau de contrôle. L'élément 1 constitué d'un matériau plastique, est en forme de triangle équilatéral. Les inscriptions sur cette face représentent, en général, le tracé des voies ferrées lesquelles sont figurées en noir parallèlement aux côtés du triangle équilatéral. Ainsi, la figure 1A représente un tronçon 2 de voie ferrée ; 1B un tronçon de voie comportant une frontière 3 du circuit de voie ; 1C un tronçon de voie percé d'une fente pour un voyant d'occupation 4 ; 1D un tronçon de voie avec un voyant 5 de signal ; 1E un tronçon de voie avec un organe de commande 6 qui peut être réalisé soit en tant que bouton-poussoir soit en commutateur ; 1F une aiguille 7-7' de voie ferrée ou branchement simple avec les deux voyants 4 d'occupation ; 1G le même que 1F avec en plus un orifice 9 utilisé pour le voyant de contrôle de calage des aiguilles ; 1H le même élément que 1G avec en plus un signe 10 parallèle à la branche 7' de l'aiguille indiquant un sens possible de l'aiguillage ; 1I le même élément que 1G avec en plus un signe 11 parallèle à la branche 7 de l'aiguille indiquant un sens possible de l'aiguillage ; 1J le même élément que 1G avec en plus deux signes 10 et 11 parallèles respectivement aux branches 7' et 7 indiquant chacun un sens possible de l'aiguillage ; 1K représente une partie de croisement constituée des branches 7, 7', 7" et leurs voyants 4 d'occupation ; 1L le même que 1K avec en plus les signes 10 et 11 identiques à ceux de 1J.

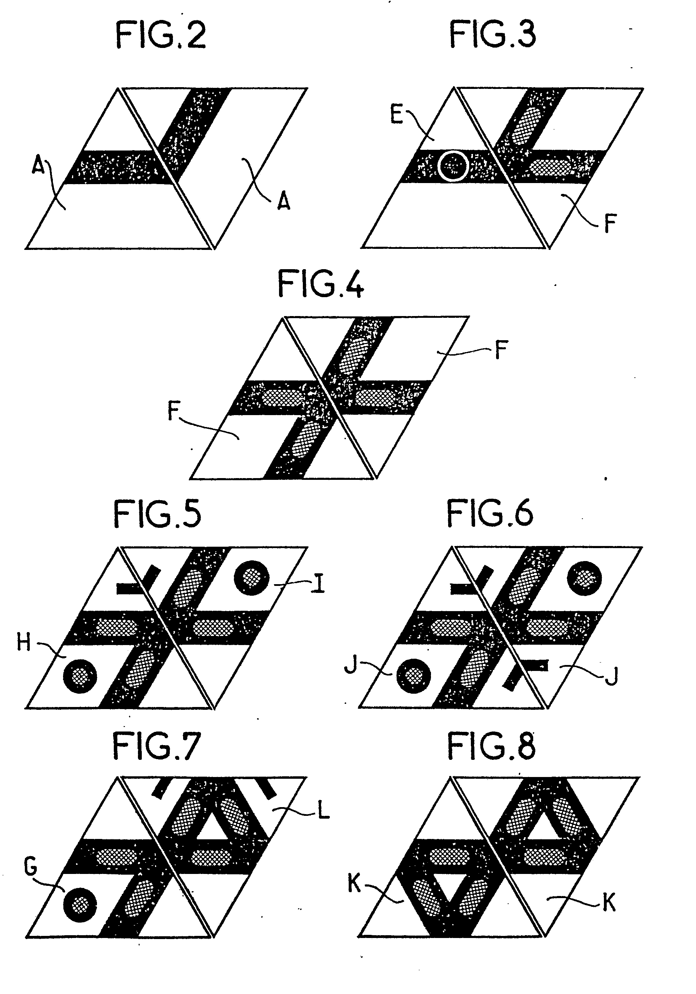

La figure 2 représente une combinaison de deux éléments conformes à la figure 1A disposés à 60° l'un par rapport à l'autre ; la figure 3 une combinaison de deux éléments conformes à la figure 1E et à la figure 1F, la figure 4 la combinaison de deux éléments constituant une traversée ordinaire ; la figure 5 la combinaison de deux éléments conformes aux figures 1H et 1I constituant une traversée jonction simple ; la figure 6 la combinaison de deux éléments conformes à la figure 1J constituant une traversée jonction double ; la figure 7 la combinaison de deux éléments conformes aux figures 1G et 1L et la figure 8 la combinaison de deux éléments conformes à la figure 1K constituant une jonction croisée.

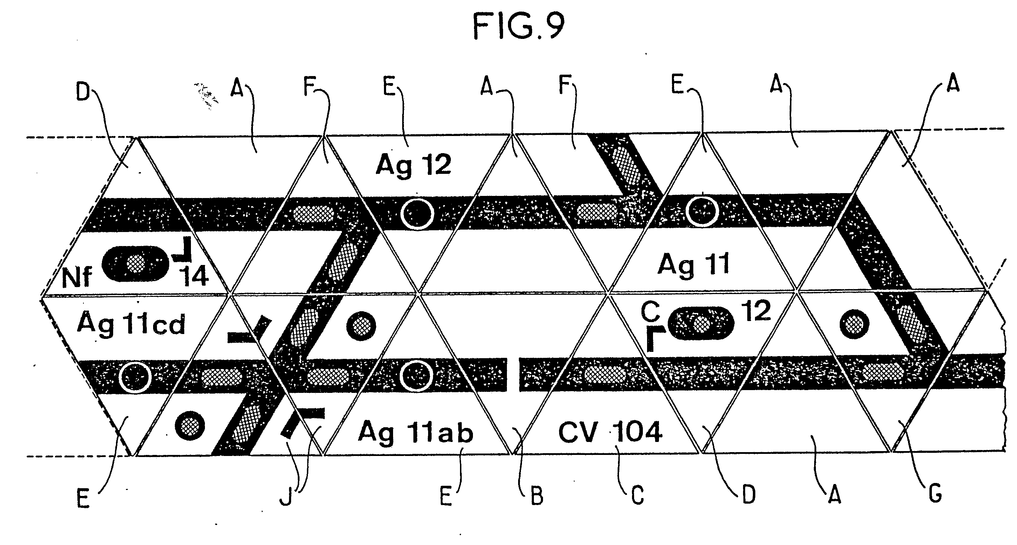

La figure 9 illustre un exemple du réseau des voies ferrées constitué à l'aide d'éléments 1 tels que décrits sur les figures 1A à 1L.

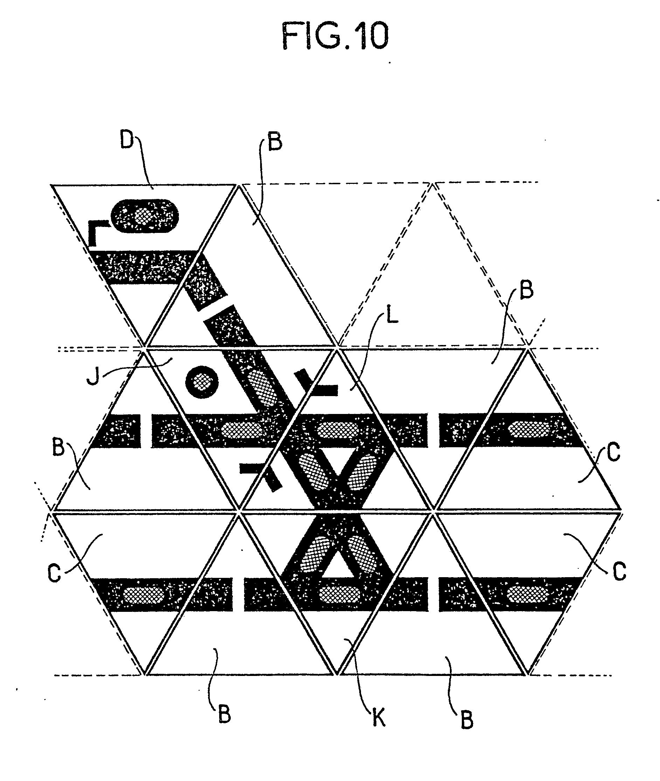

La figure 10 illustre un autre exemple réalisé selon le même principe.

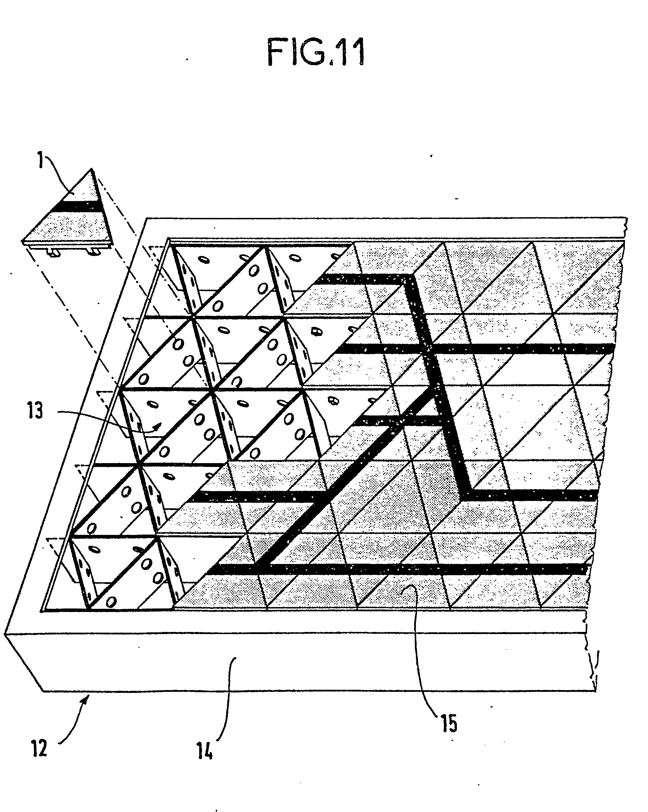

On voit sur la figure 11 un tableau de contrôle optique et/ou de commande 12 constitué d'une grille 13 de structure métallique ou plastique dont les alvéoles forment des triangles équilatéraux. L'ensemble est enserré dans un cadre 14. Chaque alvéole reçoit un élément 1 tel que précédemment décrit de façon à constituer une mosaïque telle que 15.

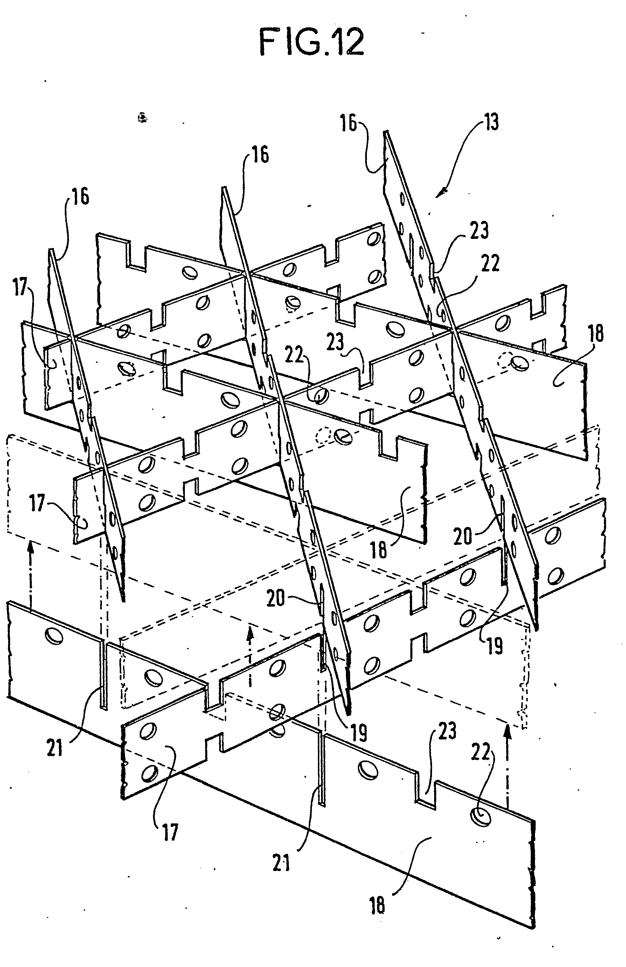

On voit sur la figure 12 un exemple de réalisation de la grille 13 à l'aide de plaquettes métalliques 16, 17 et 18. Les plaquettes 16 et 17 sont identiques et comportent par exemple la même largeur. Les plaquettes 18 ont une largeur plus grande que celle des plaquettes 16 et 17. L'imbrication des plaquettes 16, 17, 18 se fait respectivement selon des fentes transversales 19, 20, 21. L'intervalle entre les fentes consécutives 19 est égal à l'intervalle entre deux fentes consécutives 20 et à l'intervalle entre deux fentes consécutives 21. Ainsi on obtient une structure dont les alvéoles forment un triangle équilatéral. La fente 21 a une profondeur égale à la largeur de la plaquettes 16 ou 17. Les fentes 19 et 20 ont une profondeur égale par exemple à la moitié de la largeur des plaquettes 16 et 17. Chacune des plaquettes 16, 17, 18 comportent des ouvertures circulaires telles que 22 et des fentes rectangulaires 23. Les fentes rectangulaires 23 sont disposées à mi-distance des fentes longitudinales consécutives 19 ou 20 ou 21. Les ouvertures circulaires 22 sont disposées de part et d'autre de la fente rectangulaire 22. Comme il sera décrit d'une façon détaillée plus loin, les ouvertures circulaires 22 permettent l'encliquetage de l'élément 1 dans la grille 13. De même les fentes rectangulaires 23 sont prévues pour le passage des connexions électriques.

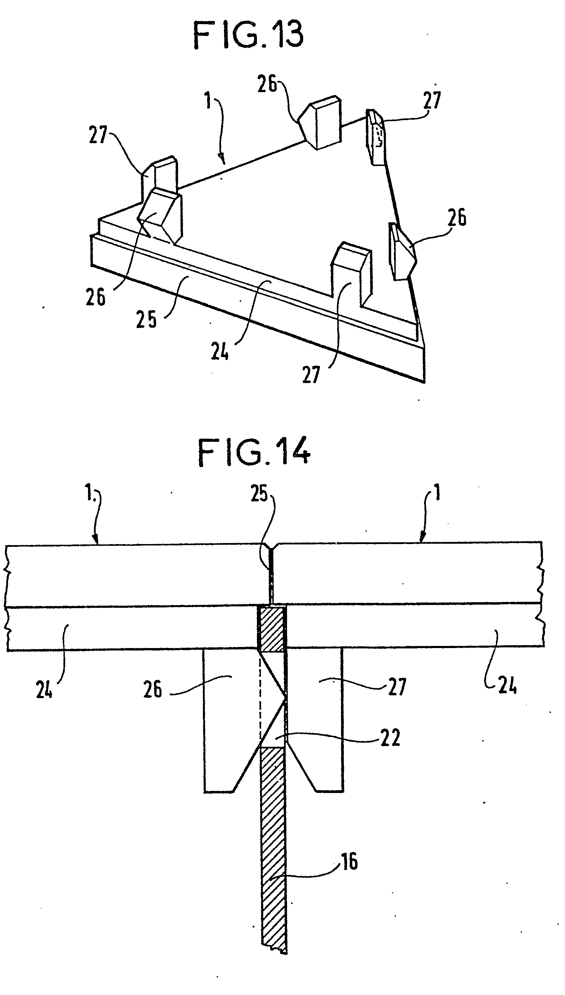

On voit sur la figure 13 la face arrière d'un élément 1. L'élément 1 comporte sur ses trois faces un rebord 24 en retrait de son plus grand périmètre 25 de façon que les plaquettes de la grille 13 ne gênent pas l'emboîtage des éléments 1 qui doivent être jointifs sur la face frontale de façon à présenter des schémas tels que ceux des figures 9 et 10 sans solution de continuité. Afin de permettre un emboîtement adéquat de l'élément 1 dans n'importe quel alvéole de la grille 13 chacun des côtés du rebord 24 est muni d'un cliquet 26 et d'une patte de guidage 27 disposée symétriquement par rapport aux extrémités du côté.

Sur la figure 14 on voit une juxtaposition de deux éléments 1 de part et d'autre de la plaquette 16 par exemple. Le cliquet 26 s'encliquète dans l'ouverture circulaire 22 et son extrémité est en contact avec la patte de guidage 27 de l'élément juxtaposé.

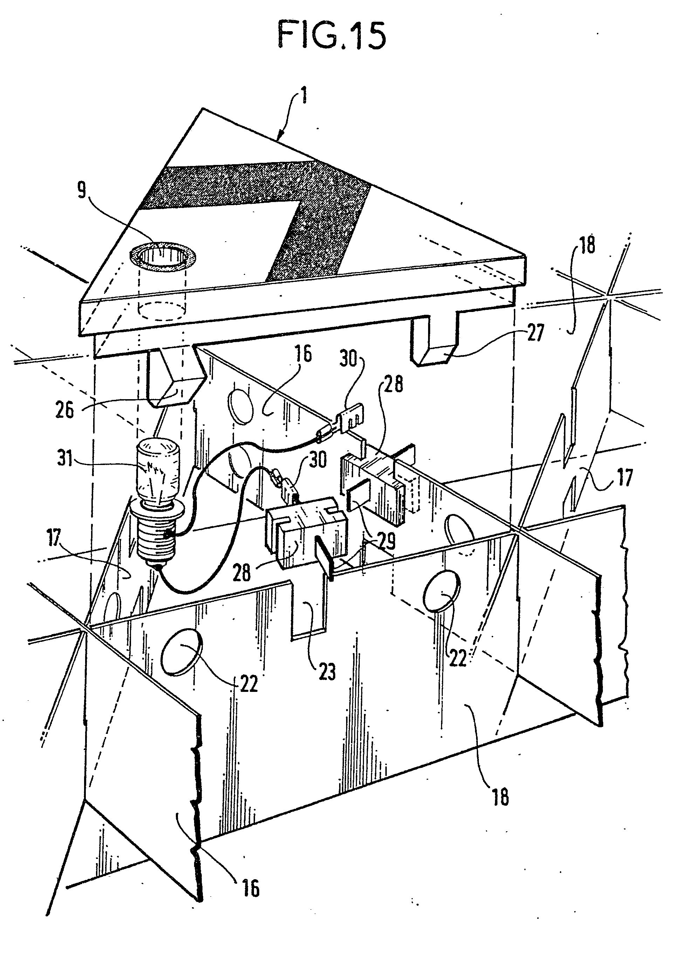

La figure 15 illustre un exemple de réalisation d'alimentation électrique du panneau de contrôle et/ou de commande. Les fentes rectangulaires 23 permettent l'insertion de pavés isolants 28 comportant des connecteurs mâles 29 sur lesquels on peut insérer des connecteurs femelles 30. L'alimentation électrique d'une lampe 31 peut être réalisée par des fils de jonction souple permettant l'insertion de celle-ci dans l'orifice 9 de l'élément 1G. Le même dispositif d'alimentation peut être utilisé pour un bouton de commande.

Les applications de ce tableau peuvent être multiples mais s'emploient particulièrement bien aux panneaux en service dans les postes d'aiguillage de voies ferrées. Les modifications et les remplacements des éléments du tableau sont particulièrement aisés.

**Revendications**

1. Tableau de contrôle optique et/ou de commande des postes d'aiguillage des voies ferrées comportant un support en forme de grille (13) constitué d'au moins deux séries de plaquettes (16, 17, 18) comportant des fentes (19, 20, 21) équidistantes sur lesdites séries et emboîtées les unes dans les autres et dans lesdites fentes (19, 20, 21) de façon à réaliser des alvéoles sur lesquels sont superposés des éléments (1) discrets portant des inscriptions partielles du plan du réseau des voies ferrées, lesdits éléments comportant sur la face opposée aux inscriptions des cliquets (26) de fixation sur ladite grille (13), caractérisé par le fait que lesdits éléments (1) sont en forme de triangles équilatéraux, comportant en outre des pattes de guidage (27) sur ladite face opposée, lesdites plaquettes (16, 17, 18) étant munies d'ouvertures (22), ledit cliquet étant juxtaposé à travers cette ouverture (22) à ladite patte de guidage (27) de telle sorte qu'une patte de guidage (27) d'un élément (1) est en contact avec un cliquet (26) d'un élément (1) juxtaposé.

2. Tableau de contrôle optique et/ou de commande selon la revendication 1, caractérisé en ce que lesdites inscriptions comportent des tracés de voies parallèles aux côtés dudit triangle équilatéral.

## Claims

1. Optical control and/or command panel for railway-signal boxes comprising a base in the form of a grid (13) constituted of at least two series of plates (16, 17, 18) comprising equidistant slots on said series and being fitted into one another and into said slots (19, 20, 21) in order to build up alveoles on which discrete elements (1) are superposed bearing partial inscriptions of the plan of the railway net, said elements comprising fixation straps (26) with said grid (13) on the face opposed to the inscriptions, characterized in that said elements (1) have the shape of equilateral triangles, further comprising guiding clamps (27) on said opposed face, said plates (16, 17, 18) being provided with openings (22), said strap being juxtaposed via this opening (22) to said guiding clamp (27), so that a guiding clamp (27) of one element (1) is in contact with a strap (26) of a juxtaposed element (1).

2. Optical control and/or command panel according to claim 1, characterized in that said inscriptions bear railway layouts parallel to the sides of said equilateral triangle.

## Ansprüche

1. Optisches Überwachungs- und/oder Steuerungstableau für Eisenbahn-Stellwerke mit einer Halterung in Gitterform (13) bestehend aus mindestens zwei Serien von Platten (16, 17, 18), die Schlitze (19, 20, 21) gleichen Abstands auf diesen Serien aufweisen und ineinander und in die Schlitze (19, 20, 21) verschachtelt sind, so daß sie Zellen bilden, auf die Einzelelemente (1) aufgesetzt werden, die Teilbeschriftungen des Eisenbahnnetzplans aufweisen, wobei diese Elemente auf der den Beschriftungen entgegengesetzten Seite Klinken (26) zur Befestigung auf dem Gitter (13) aufweisen, dadurch gekennzeichnet, daß die Elemente (1) die Form gleichseitiger Dreiecke und außerdem Führungslaschen (27) auf der genannten entgegengesetzten Seite aufweisen, wobei die Platten (16, 17, 18) mit Öffnungen (22) versehen sind und die Klinke durch diese Öffnung (22) hindurch an der Führungslasche (27) anliegt, so daß eine Führungslasche eines Elements (1) mit einer Klinke (26) eines danebenliegenden Elements (1) in Berührung steht.

2. Optisches Überwachungs- und/oder Steuerungstableau nach Anspruch 1, dadurch gekennzeichnet, daß die Beschriftungen Wegspuren aufweisen, die parallel zu den Seiten des gleichseitigen Dreiecks verlaufen.

# FIG.1

# FIG.2

# FIG.3

# FIG.4

# FIG.5

# FIG.6

# FIG.7

# FIG.8

# FIG.9

Ag 12

Nf ⬭ ⌐14

Ag 11cd

Ag 11

C ⬭ 12

Ag 11ab

CV 104

0 023 336

# FIG.10

# FIG.11

# FIG.12

# FIG.13

# FIG.14

# FIG.15